# EUROPÄISCHE PATENTSCHRIFT

(11) **EP 3 123 140 B1**
(45) Veröffentlichungstag und Bekanntmachung des Hinweises auf die Patenterteilung: **25.12.2019**
(21) Anmeldenummer: 15710451.4
(22) Anmeldetag: 05.03.2015
(51) Int. Cl.: G01M 17/02, G01B 11/24

(54) **VERFAHREN UND VORRICHTUNG ZUM ÜBERPRÜFEN DER REIFENMONTAGE AN EINEM FAHRZEUG**
METHOD AND DEVICE FOR TESTING THE MOUNTING OF TYRES ON A VEHICLE
PROCÉDÉ ET DISPOSITIF DE CONTRÔLE DU MONTAGE DE PNEUMATIQUES SUR UN VÉHICULE

(30) Priorität: 25.03.2014 DE 102014205515
(43) Veröffentlichungstag der Anmeldung: 01.02.2017
(73) Patentinhaber: Beissbarth GmbH, 80993 München (DE)
(72) Erfinder: LUTHER, Marc, 31228 Peine (DE); NOJEK, Klaudia, 30161 Hannover (DE)
(74) Vertreter: Schmitt-Nilson Schraud Waibel Wohlfrom Patentanwälte Partnerschaft mbB
(86) Internationale Anmeldenummer: PCT/EP2015/054660
(87) Internationale Veröffentlichungsnummer: WO 2015/144417

(56) Entgegenhaltungen:
- WO-A1-96/10727
- DE-A1-102012 208 177
- US-A1- 2012 207 340

## Beschreibung

Die Erfindung betrifft ein Verfahren und eine Vorrichtung zum Überprüfen der Montage von Reifen an einem Fahrzeug, insbesondere zum Prüfen, ob die Reifen in der korrekten Laufrichtung am Fahrzeug montiert sind.

### Stand der Technik

Die Rotations- bzw. Laufrichtung ist ein wichtiger Parameter bei der Montage von Reifen an einem Fahrzeug, insbesondere an einem Kraftfahrzeug. Obwohl Reifen in der Regel von ausgebildeten Mechanikern an Fahrzeugen montiert werden, besteht die Gefahr, dass hierbei Fehler auftreten, die zu einer erhöhten Geräuschentwicklung und/oder einer reduzierten Lebensdauer führen.

Es besteht daher der Bedarf nach einem Verfahren und einer Vorrichtung, die es jeweils ermöglichen, die Montage von Reifen an einem Fahrzeug, insbesondere im sogenannten "Aftermarket", zu überprüfen, um eine falsche Montage der Reifen schnell und zuverlässig zu erkennen.

DE 10 2012 208 117 offenbart ein Verfahren und eine Vorrichtung zum optischen Inspizieren des Laufflächenprofils eines Fahrzeugrades, um die Eignung des Laufflächenprofils, insbesondere für den Einsatz bei winterlichen Straßenverhältnissen, zu überprüfen.

Die WO 96/10727 zeigt einen Verfahren zur Bestimmung der physikalischen Charakteristik eines Reifens, der auf ein Fahrzeug montiert ist. Die US 2012/0207340 zeigt eine Methode und ein System, um eine Klassifikation von Reifen basierend auf Merkmalen des Reifenprofils durchzuführen.

### Offenbarung der Erfindung

Ein erfindungsgemäßes Verfahren zum Überprüfen der Montage von Reifen an einem Fahrzeug umfasst, Bilder von wenigstens zwei am Fahrzeug montierten Reifen aufzunehmen, wobei die Bilder jeweils wenigstens einen Bereich eines Reifens umfassen, und die aufgenommenen Bilder miteinander und/oder mit gespeicherten Referenzbildern zu vergleichen, um zu bestimmen, ob die Reifen korrekt am Fahrzeug montiert sind.

Eine erfindungsgemäße Vorrichtung zum Überprüfen der Montage von Reifen an einem Fahrzeug hat wenigstens eine Bildaufnahmeeinrichtung, die ausgebildet ist, Bilder von wenigstens zwei am Fahrzeug montierten Reifen aufzunehmen, wobei die Bilder jeweils wenigstens einen Bereich eines Reifens, der insbesondere die Lauffläche des Reifens umfasst, und eine Auswerteeinrichtung, die ausgebildet ist, die aufgenommenen Bilder auszuwerten, um zu bestimmen, ob die Reifen korrekt am Fahrzeug montiert sind.

Dazu kann die Auswerteeinrichtung insbesondere eine eine Speichereinrichtung, in der Bilder gespeichert sind, die jeweils wenigstens einen Bereich eines Reifens umfassen, und eine Vergleichseinrichtung aufweisen, die ausgebildet ist, von der wenigstens einen Bildaufnahmeeinrichtung aufgenommenen Bilder mit in der Speichereinrichtung gespeicherten Bildern zu vergleichen.

Durch Vergleichen der Bilder von wenigstens zwei am Fahrzeug montierten Reifen, wobei insbesondere Methoden der automatischen, insbesondere computergestützten, Bildverarbeitung zum Einsatz kommen können, kann zuverlässig und schnell überprüft werden, ob die Reifen richtig, insbesondere in der richtigen Laufrichtung, am Fahrzeug montiert sind. Montagefehler, insbesondere Fehler, bei denen ein Reifen mit unterschiedlicher Laufrichtung oder einen anderen als der vom Reifenhersteller vorgesehenen Laufrichtung am Fahrzeug montiert ist, können auf diese Weise schnell und zuverlässig erkannt werden.

In einer Ausführungsform umfassen die aufgenommenen Bilder insbesondere Bilder wenigstens eines Bereiches der Lauffläche der Reifen. Anhand von Bildern der Lauffläche, insbesondere des Profils der Lauffläche eines Reifens, kann seine Laufrichtung schnell und zuverlässig erkannt und seine Montage sicher überprüft werden.

In einer Ausführungsform schließt das Verfahren ein, zu bestimmen, ob es die Lauffläche ein laufrichtungsabhängiges Profil aufweist, das vorgibt, in welcher Laufrichtung der Reifen am Fahrzeug zu montieren ist. Auf diese Weise kann auch für Reifen, die ein laufrichtungsabhängiges Profil aufweisen, überprüft werden, ob sie korrekt, d.h. in der richtigen Laufrichtung, am Fahrzeug montiert sind.

Dafür ist es besonders vorteilhaft, Bilder des Profils der Lauffläche mit einer Datenbank abzugleichen, in der eine Vielzahl von Bildern von Reifenprofilen gespeichert ist. Wenn das Bild eines Profils des überprüften Reifens in der Datenbank gespeichert ist, kann das Profil eindeutig identifiziert und der Datenbank die korrekte Laufrichtung des Reifens entnommen werden.

In einer Ausführungsform schließt das Verfahren insbesondere ein, Bilder von Reifen, die an einer gemeinsamen Achse des Fahrzeugs montiert sind, aufzunehmen und zu vergleichen, um zu bestimmen, ob die Reifen korrekt, insbesondere mit der gleichen Laufrichtung, am Fahrzeug montiert sind. Auf diese Weise kann zuverlässig überprüft werden, ob die Räder bzw. Reifen an einer gemeinsamen Achse des Fahrzeugs korrekt montiert sind.

In einer Ausführungsform schließt das Verfahren ein, Bilder von allen, insbesondere vier oder sechs, am Fahrzeug montierten Reifen aufzunehmen und zu vergleichen, um zu bestimmen, ob alle Reife des Fahrzeugs korrekt, insbesondere mit der gleichen Laufrichtung, am Fahrzeug montiert sind.

Eine erfindungsgemäße Vorrichtung kann mehrere Bildaufnahmeeinrichtungen, insbesondere eine Bildaufnahmeeinrichtung für jedes Reifen des Fahrzeugs aufweisen, so dass gleichzeitig Bilder aller Reifen des Kraftfahrzeugs aufgenommen werden können. Die Vorrichtung kann insbesondere zwei Bildaufnahmeeinrichtungen, jeweils eine auf jeder Seite des Fahrzeugs, aufweisen, so dass gleichzeitig Bilder aller Reifen, die an einer gemeinsamen Achse des Fahrzeugs montiert sind, aufgenommen werden können. Durch den Einsatz mehrerer Bildaufnahmeeinrichtungen kann die Montage der an einem Fahrzeug montierten Reifen mit dem erfindungsgemäßen Verfahren besonders schnell überprüft werden.

Eine erfindungsgemäße Vorrichtung kann eine oder mehrere Beleuchtungseinrichtungen aufweisen, die den von wenigstens einer Bildaufnahmeeinrichtung aufzunehmenden Bereich der Reifen beleuchten, so dass die Bilder unabhängig vom Umgebungslicht mit guter Qualität aufgenommen werden können.

Die Bildaufnahme- und/oder Beleuchtungseinrichtungen können unterhalb der Fahrbahnebene, insbesondere in einer Überfahrrinne, installiert sein, so dass sie von dem Fahrzeug überfahrbar sind und die wenigstens eine Bildaufnahmeeinrichtung in der Lage ist, während der Überfahrt Bilder von der Aufstandsfläche des Reifen auf wenigstens einem transparent und/oder mit wenigstens einer Öffnung ausgebildeten Deckel der Überfahrrinne aufzunehmen.

Ausführungsbeispiele der Erfindung werden im Folgenden anhand der beigefügten Zeichnungen beschrieben.

### Kurze Figurenbeschreibung

Figur 1 zeigt ein erstes Ausführungsbeispiel einer erfindungsgemäßen Vorrichtung.
Figur 2 zeigt ein zweites Ausführungsbeispiel einer erfindungsgemäßen Vorrichtung.
Figur 3 zeigt eine Draufsicht auf ein schematisch dargestelltes Fahrzeug bei der Überfahrt über eine erfindungsgemäße Vorrichtung.

Die Figuren 4a bis 4c zeigen schematisch Beispiele von Bildern der Laufflächen von am Fahrzeug montierten Reifen.

### Ausführliche Figurenbeschreibung

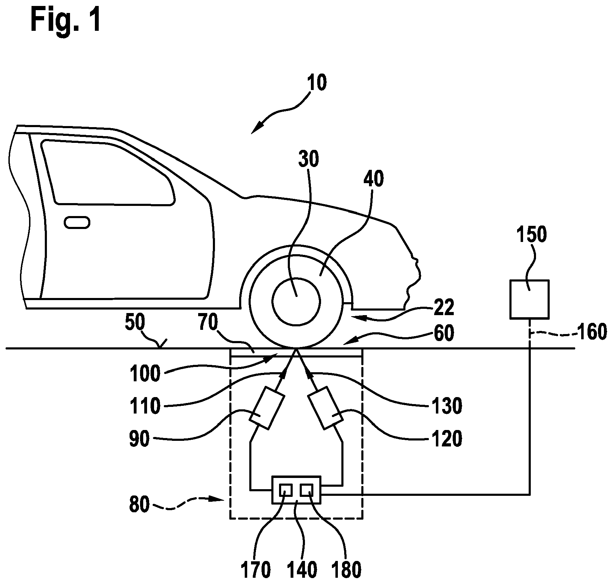

Figur 1 zeigt eine schematische Seitenansicht eines nur teilweise dargestellten Kraftfahrzeugs 10, das mit einem Vorderrad 22, das eine Felge 30 und einen Reifen 40 umfasst, über einer in einer Fahrbahnoberfläche 50 angeordneten Öffnung 60 positioniert ist. In dem in der Figur 1 dargestellten Beispiel ist die Öffnung 60 in der Fahrbahnoberfläche 50 durch eine Deckelplatte 70 verschlossen, die Teil einer gestrichelt dargestellten und in die Fahrbahn 50 eingelassen Überfahrrinne 80, ist. Zum besseren Verständnis ist die Überfahrrinne 80 in der schematischen Figur 1 relativ zum Fahrzeug 10 vergrößert dargestellt. Sie kann in der Realität auch wesentlich kleinere Abmessungen aufweisen. Auch muss die Deckelplatte 70 nicht die in Figur 1 gezeigte Größe aufweisen, sondern kann auch von kleinerem Format sein.

In der Überfahrrinne 80 befindet sich eine Beleuchtungseinrichtung 90, die im Betrieb elektromagnetische Strahlung in Richtung auf die Reifenaufstandsfläche 100 des Reifens 40 auf der Deckelplatte 70 strahlt. Die elektromagnetische Strahlung, die in der Figur 1 durch einen Pfeil 110 symbolisiert ist, muss nicht kohärent sein und kann mit ihrer Frequenz bzw. Wellenlänge im IR-Bereich, im UV-Bereich und/oder im optisch sichtbaren Bereich liegen. Die Deckelplatte 70 ist aus einem Material ausgebildet, das die von der Beleuchtungseinrichtung 90 ausgesendete elektromagnetische Strahlung im Wesentlichen unverfälscht passieren lässt.

Weiterhin ist in der Überfahrrinne 80 eine Bildaufnahmevorichtung 120 derart angeordnet, dass sie von der Reifenaufstandsfläche 100 reflektierte elektromagnetische Strahlung, die in der Figur 1 durch einen Pfeil 130 symbolisiert ist, empfängt, um ein Bild der Reifenaufstandsfläche 100 aufzunehmen. Entsprechend der von der Bildaufnahmevorichtung 120 empfangenen Strahlung wird ein bzw. werden mehrere Signale von der Bildaufnahmevorrichtung 120 an eine Datenverarbeitungseinrichtung 140, die auch innerhalb der Überfahrrinne 80 angeordnet ist, übermittelt, und von dieser verarbeitet. Die Datenverarbeitungseinrichtung 140 kann selbstverständlich auch außerhalb der Überfahrrinne 80 angeordnet sein.

Ein Ergebnis der Signalverarbeitung durch die Datenverarbeitungseinrichtung 140 wird an eine Ausgabeeinrichtung 150 übertragen, die in dem in der Figur 1 dargestellten Beispiel oberhalb der Fahrbahnebene 50 vor dem Fahrzeug 10 angeordnet ist. Es ist auch möglich, dass das Ergebnis mittels einer Sender/Empfänger-Kombination, die in der Figur 1 nicht dargestellt ist, drahtlos, wie durch die gestrichelte Linie 160 angedeutet, an die Ausgabeeinrichtung 150 übertragen wird. Es ist auch möglich, dass das Ergebnis der Signalverarbeitung am eine Ausgabeeinrichtung 150 übertragen wird, die innerhalb des Fahrzeugs 10 angeordnet ist, so dass der Fahrer des Fahrzeugs 10 die Information unmittelbar zur Kenntnis nehmen kann.

Die Datenverarbeitungseinrichtung 140 verarbeitet nicht nur die von der Bildaufnahmevorichtung 120 bereitgestellten Signale, sondern steuert auch das Zusammenspiel der Beleuchtungseinrichtung 90, der Bildaufnahmeeinrichtung 120 und der Ausgabeeinrichtung 150. Es ist auch möglich, dass wenigstens zwei von der Beleuchtungseinrichtung 90, der Bildaufnahmeeinrichtung 120 und der Datenverarbeitungseinrichtung 140 integral in einer gemeinsamen Vorrichtung ausgebildet sind. Im dargestellten Beispiel sind sie zum besseren Verständnis der Funktionsweise des gezeigten Ausführungsbeispiels der Erfindung separat dargestellt.

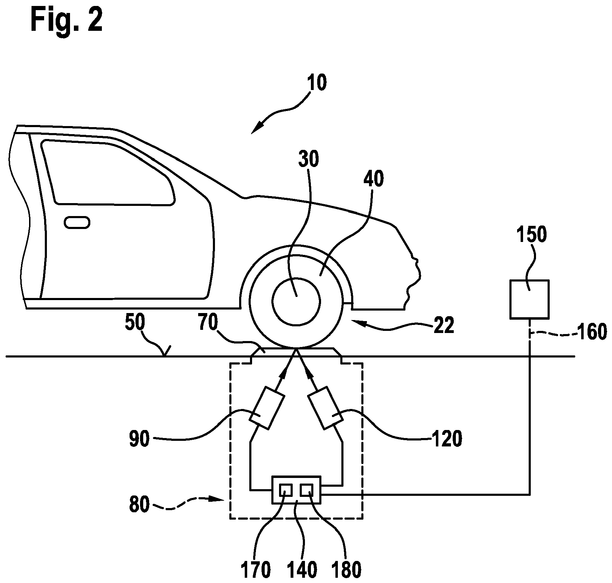

Figur 2 zeigt ein zweites Ausführungsbeispiel einer erfindungsgemäßen Vorrichtung, das sich von dem in Figur 1 dargestellten Ausführungsbeispiel dadurch unterscheidet, dass die Deckelplatte 70 in Form einer Schwelle auf der Fahrbahnoberfläche 50 angeordnet ist, über die das Fahrzeug 10 mit verminderter Geschwindigkeit hinwegfahren kann. Vorzugsweise beträgt die Höhe der Deckelplatte 70 nicht mehr als 70 mm. Bei diesem Ausführungsbeispiel bemerkt der Fahrer des Fahrzeugs 10 aufgrund der Höhe der Deckelplatte 70, dass er über eine Schwelle fährt und vermindert dementsprechend die Fahrgeschwindigkeit. Durch eine verminderte Fahrgeschwindigkeit kann die Qualität der Bildaufnahme gesteigert werden, da Bewegungsunschärfen reduziert werden.

Zur Auswertung der von der Bildaufnahmeeinrichtung 120 aufgenommenen Bilder weist die Datenverarbeitungseinrichtung 140 vorzugsweise eine Vergleichseinrichtung 170 auf, die ausgebildet ist, die Bilder von wenigstens zwei Reifen 40 des Fahrzeugs 10, insbesondere die Bilder von Reifen 40, die an einer gemeinsamen Achse des Fahrzeugs 10 montiert sind, miteinander zu vergleichen, um festzustellen, ob die wenigstens zwei Reifen 40 in derselben Laufrichtung am Fahrzeug 10 montiert sind.

Zusätzlich kann die Datenverarbeitungseinrichtung 140 eine Speichereinrichtung 180 aufweisen, die es der Vergleichseinrichtung 170 ermöglicht, die von der Bildaufnahmeeinrichtung 120 aufgenommenen Bilder mit in der Speichereinrichtung 180 gespeicherten Bildern von Reifenlaufflächen vergleicht, um die Reifenlauffläche eindeutig zu identifizieren und insbesondere die für den Reifen 40 bzw. seine Lauffläche vorgesehene Laufrichtung zu bestimmen. Bei einer Abweichung der für einen Reifen 40 vorgesehenen Laufrichtung von der realen Laufrichtung des am Fahrzeug 10 montierten Reifens 40 wird eine entsprechende Fehlermeldung an die Ausgabeeinrichtung 150 übertragen, so dass der Fahrer des Fahrzeugs 10 bzw. eine die Überprüfung durchführenden Mechaniker gewarnt und aufgefordert wird, eine korrekte Montage der Reifen 40 zu veranlassen.

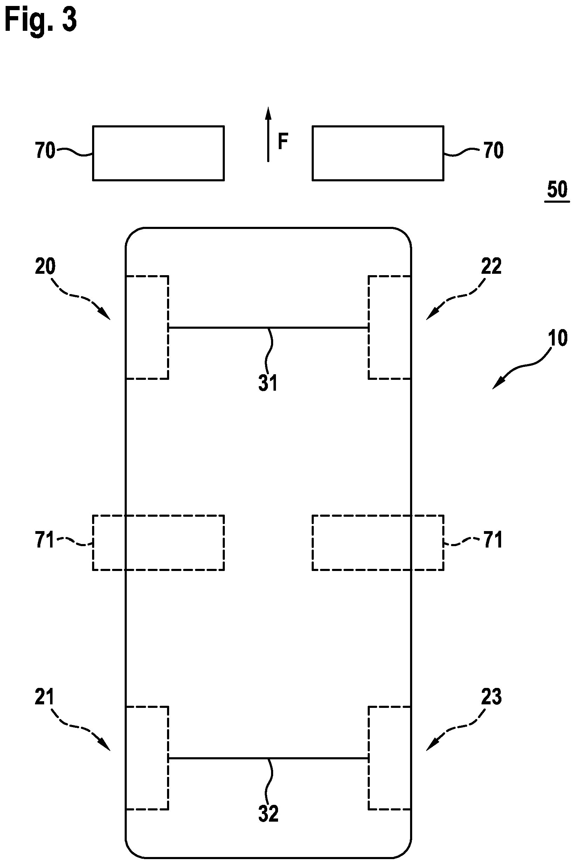

Figur 3 zeigt eine Draufsicht auf ein schematisch dargestelltes Fahrzeug 10 mit an einer Vorderachse 31 angebrachten Vorderrädern 20, 22 und an einer Hinterachse 32 angebrachten Hinterrädern 21, 23, wobei vorgesehen ist, dass sich das Fahrzeug 10 in Richtung des Pfeiles F bewegt. Dargestellt sind außerdem zwei in oder auf der Fahrbahnoberfläche 50 angeordnete Deckelplatten 70, die gemäß einer in den Figuren 1 und 2 dargestellten Ausführungsformen ausgebildet sein können. Nicht dargestellt sind die jeweils unterhalb der Deckelplatten 70 angeordneten Beleuchtungseinrichtungen 90, Bildaufnahmeeinrichtungen 120 bzw. Datenverarbeitungseinrichtungen 140.

Mit dem in der Figur 3 dargestellten Aufbau können die Laufflächenprofile beider Vorderräder 20, 22 gleichzeitig inspiziert werden, wenn das Fahrzeug 10 über die Deckelplatten 70 fährt. Es ist erkennbar, dass die Deckelplatten 70 so angeordnet sind, dass nach den Vorderrädern 20, 22 auch die Hinterräder 21, 23 inspiziert werden können, wenn sich das Fahrzeug 10 in der Fahrtrichtung F fortbewegt.

Optional können zusätzlich auch die gestrichelt dargestellten Deckelplatten 71 mit entsprechend darunter angeordneten (in der Figur 3 nicht gezeigten) Beleuchtungseinrichtungen 90, Bildaufnahmeeinrichtungen 120 und Datenverarbeitungseinrichtungen 140 vorgesehen sein, so dass Bilder der Laufflächen der Hinterräder 21, 23 gleichzeitig mit Bildern der Laufflächen der Vorderräder 20, 22 aufgenommen werden können. Auf die Darstellung einer entsprechenden Ausgabeeinrichtung 150 wurde in der Figur 3 aus Gründen der besseren Übersichtlichkeit verzichtet.

Vorzugsweise haben die Deckelplatten 70 bzw. 71 eine Breite quer zur Bewegungsrichtung F des Fahrzeugs 10 von mindestens 700 mm, wobei die darunter befindlichen Beleuchtungseinrichtungen 90 und Bildaufnahmeeinrichtungen 120 so ausgelegt sind, dass die gesamte Breite der Deckelplatten 70, 71 nutzbar ist, um die Laufflächen der Reifen 40, 41, 42, 43 zu inspizieren. Bei einer Erfassungsbreite von mindestens 700 mm ist sichergestellt, dass die Reifen 40, 41, 42, 43 möglichst vieler Fahrzeugklassen, vom Kleinwagen bis zum (Leicht-) LKW, erfasst werden können.

Um zu gewährleisten, dass alle Reifen 40, 41, 42, 43 an allen zu inspizierenden Fahrzeugen 10 erfasst werden können, können in der Figur 3 nicht gezeigte Leiteinrichtungen vorgesehen sein, die ausgebildet sind dafür zu sorgen, dass alle Fahrzeuge 10 die Deckelplatten 70, 71 bzw. die darunter angeordneten Bildaufnahmeeinrichtungen 120 überfahren.

Nachdem die Bilder der Laufflächen der Reifen 40, 41, 42, 43 von den unter den Deckelplatten 70, 71 angeordneten Bildaufnahmeeinrichtungen 120 aufgenommen worden sind, werden diese von wenigstens einer Datenverarbeitungseinrichtung 140 verglichen, um zu überprüfen, ob die Reifen 40, 41, 42, 43 korrekt am Fahrzeug 10 montiert sind.

Dazu können mehrere Datenverarbeitungseinrichtungen 140 drahtlos oder drahtgebunden miteinander verbunden sein, so dass sie die Bilder der Reifen 40, die an den verschiedenen Rädern 20, 21, 22, 24 des Fahrzeugs 10 montiert sind, miteinander vergleichen können. Alternativ kann auch eine zentrale Datenverarbeitungseinrichtung 140 vorgesehen sein, die drahtlos oder drahtgebunden mit allen Bildaufnahmeeinrichtungen 120 verbunden ist, um die von den Bildaufnahmeeinrichtungen 120 aufgenommenen Bilder auszuwerten und insbesondere miteinander und/oder mit in der Speichereinrichtung 180 gespeicherten Referenzbildern zu vergleichen.

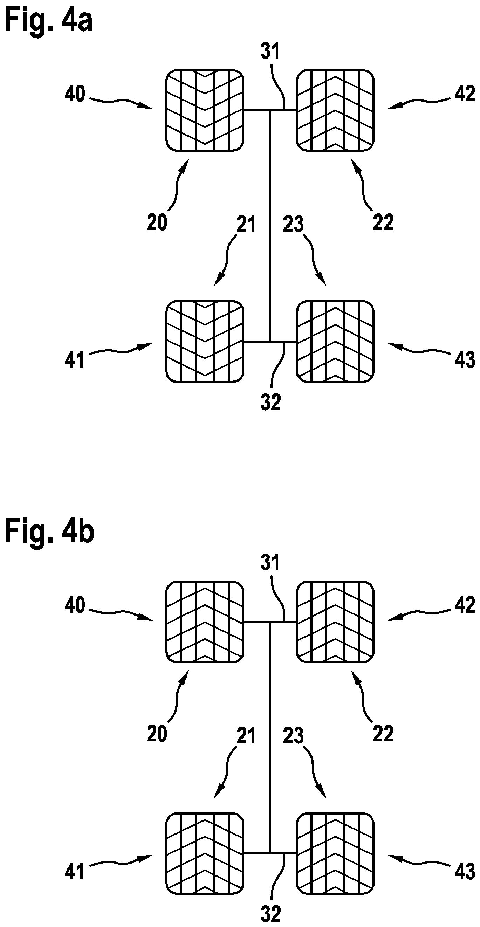

Die Figuren 4a bis 4c zeigen schematisch drei Beispiele für Bilder der Laufflächen von am Fahrzeug 10 montierten Reifen 40, 41, 42, 43, wie sie von einer Bildaufnahmeeinrichtung 120 aufgenommen werden.

Die in der Figur 4a gezeigten Reifen 40, 41, 42, 43 haben ein laufrichtungsunabhängiges Profil, d.h. das Profil der Reifen 40, 41, 42, 43 gibt keine bevorzugte Laufrichtung des Reifen 40, 41, 42, 43 vor. In der Figur 4a sind die Reifen 40, 41, 42, 43 an allen Rädern 21, 22, 23, 24 in Bezug an der jeweiligen Achse 31, 32 auf die gleiche Art und Weise moniert, so dass kein Montagefehler vorliegt.

Anders wäre der in der Figur 4a gezeigte Fall zu beurteilen, wenn das Profil der Laufflächen der Reifen 40, 41, 42, 43 laufrichtungsabhängig wäre, d.h., wenn das Profil eine bevorzugte Laufrichtung des Reifens 40, 41, 42, 43 vorgeben würde. Da in dem in der Figur 4a gezeigten Beispiel die Reifen 40, 41 auf der linken Seite des Fahrzeugs 10 in Bezug auf die Fahrbahnoberfläche 50 eine andere Laufrichtung als die Reifen 42, 43 aufweisen, die auf der rechten Seite des Fahrzeugs 10 montiert sind, läge in diesem Fall ein Fehler vor, der die Ausgabe einer entsprechenden Fehlermeldung zur Folge hätte.

Reifen 40, 41, 42, 43 mit einem laufrichtungsabhängigen Profil müssen so montiert sein, wie in der Figur 4b gezeigt, so dass sie in Bezug auf die Fahrbahnoberfläche 50 alle die gleiche, vom Reifenprofil vorgegebene, Laufrichtung haben.

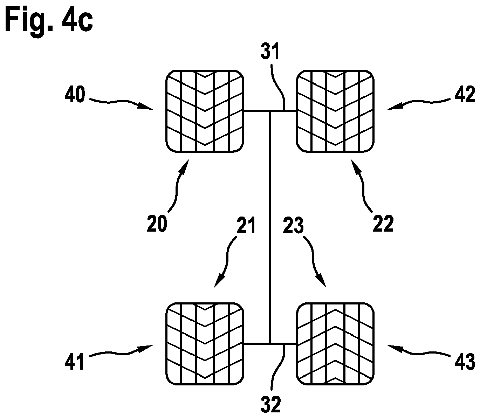

Die in der Figur 4c gezeigte Reifen-Konfiguration weist sowohl bei einem laufrichtungsunabhängigen Profil als auch bei einem laufrichtungsabhängigen Profil einen Montagefehler auf.

Bei Reifen 40, 41, 42, 43 mit laufrichtungsunabhängigen Profil, wie sie in der Figur 4a gezeigt sind, ist das rechte Vorderrad 22 in der falschen Orientierung montiert, wie aus einem Vergleich der in den Figuren 4a und 4c gezeigten Reifenprofile ersichtlich.

Bei Reifen 40, 41, 42, 43 mit einem laufrichtungsabhängigen Profil, wie sie in der Figur 4b gezeigt sind, ist dagegen das rechte Hinterrad 23 in der falschen Orientierung montiert, wie es sich sofort aus einem Vergleich der in den Figuren 4b und 4c gezeigten Reifenprofile ergibt.

Die Erfindung ermöglicht es daher, falsch, insbesondere in einer falschen Orientierung bzw. mit einer falschen Laufrichtung an einem Fahrzeug 10 montierte Reifen 40, 41, 42, 43 schnell und zuverlässig zu erkennen und die mit einer solchen falschen Montage verbundenen Nachteile in Bezug auf die Fahreigenschaften des Fahrzeugs 10 und die Haltbarkeit der Reifen 40, 41, 42, 43 zu vermeiden.

## Patentansprüche

1. Verfahren zum Überprüfen der Montage von Reifen (40, 41, 42, 43) an einem Fahrzeug (10), **dadurch gekennzeichnet, dass** das Verfahren die Schritte umfasst:
(A) Aufnehmen von Bildern von wenigstens zwei am Fahrzeug (10) montierten Reifen (40, 41, 42, 43), wobei die Bilder jeweils wenigstens einen Bereich eines Reifens (40, 41, 42, 43) und die Bilder insbesondere Bilder wenigstens eines Bereiches der Lauffläche der Reifen (40, 41, 42, 43) umfassen;
(B) Vergleichen der aufgenommenen Bilder und bestimmen, ob die Reifen (40, 41, 42, 43) korrekt am Fahrzeug (10) montiert sind, was einschließt zu bestimmen, ob die Laufflächen der Reifen (40, 41, 42, 43) ein laufrichtungsabhängiges Profil aufweisen und zu bestimmen, ob die Reifen (40, 41, 42, 43) in der durch ein laufrichtungsabhängiges Profil vorgegebenen Laufrichtung am Fahrzeug (10) montiert sind.

2. Verfahren nach Anspruch 1, wobei das Verfahren umfasst, wenigstens ein Bild des Profils der Lauffläche eines Reifens (40, 41, 42, 43) mit in einer Datenbank (180) gespeicherten Bildern von Reifenprofilen zu vergleichen.

3. Verfahren nach einem der vorangehenden Ansprüche, wobei das Verfahren einschließt, zu bestimmen, ob die Reifen (40, 41, 42, 43) alle in der gleichen Laufrichtung am Fahrzeug (10) montiert sind.

4. Verfahren nach einem der vorangehenden Ansprüche, wobei das Verfahren einschließt, Bilder von Reifen (40, 41, 42, 43), die an einer gemeinsamen Achse (31, 32) des Fahrzeugs (10) montiert sind, aufzunehmen und zu vergleichen, um zu bestimmen, ob die Reifen (40, 41, 42, 43) korrekt, insbesondere in der gleichen Laufrichtung, an der gemeinsamen Achse (31, 32) montiert sind.

5. Verfahren nach einem der vorangehenden Ansprüche, wobei das Verfahren einschließt, Bilder von wenigstens vier oder sechs am Fahrzeug (10) montierten Reifen (40, 41, 42, 43) aufzunehmen, um zu bestimmen, ob die Reifen (40, 41, 42, 43) korrekt am Fahrzeug (10) montiert sind.

6. Vorrichtung zum Überprüfen der Montage von Reifen (40, 41, 42, 43) an einem Fahrzeug (10), **dadurch gekennzeichnet, dass** die Vorrichtung aufweist:
(a) wenigstens eine Bildaufnahmeeinrichtung (120), die ausgebildet ist, Bilder von wenigstens zwei am Fahrzeug (10) montierten Reifen (40, 41, 42, 43) aufzunehmen, wobei die Bilder jeweils wenigstens einen Bereich eines Reifens (40, 41, 42, 43) umfassen; und
(b) wenigstens eine Datenverarbeitungseinrichtung (140), die ausgebildet ist, die aufgenommenen Bilder auszuwerten, um zu bestimmen, ob die Reifen (40, 41, 42, 43) korrekt am Fahrzeug (10) montiert sind, was einschließt zu bestimmen, ob die Laufflächen der Reifen (40, 41, 42, 43) ein laufrichtungsabhängiges Profil aufweisen und zu bestimmen, ob die Reifen (40, 41, 42, 43) in der durch ein laufrichtungsabhängiges Profil vorgegebenen Laufrichtung am Fahrzeug (10) montiert sind.

7. Vorrichtung nach Anspruch 6, die zusätzlich aufweist:
eine Speichereinrichtung (180), in der Bilder, die jeweils wenigstens einen Bereich eines Reifens (40, 41, 42, 43) umfassen, gespeichert sind, und
eine Vergleichseinrichtung (170), die ausgebildet ist, von der wenigstens einen Bildaufnahmeeinrichtung (120) aufgenommenen Bilder mit in der Speichereinrichtung (180) gespeicherten Bildern zu vergleichen.

## Claims

1. A method for checking the mounting of tires (40, 41, 42, 43) on a vehicle (10),
**characterized in that** the method comprises the following steps:
(A) recording images of at least two tires (40, 41, 42, 43) mounted on the vehicle (10), the images each covering at least a portion of a tire (40, 41, 42, 43), and the images comprising in particular images of at least a portion of the tread of the tires (40, 41, 42, 43);
(B) comparing the recorded images and determining whether the tires (40, 41, 42, 43) are correctly mounted on the vehicle (10), which includes determining whether the treads of the tires (40, 41, 42, 43) have a directional tread pattern and determining whether the tires (40, 41, 42, 43) are mounted on the vehicle (10) in the direction of rotation predetermined by a directional tread pattern.

2. The method according to claim 1,
wherein said method comprises comparing at least one image of the tread pattern of a tire (40, 41, 42, 43) to images of tread patterns stored in a database (180).

3. The method according to any of the preceding claims,
wherein said method comprises determining whether the tires (40, 41, 42, 43) are all mounted in the same direction of rotation on the vehicle (10).

4. The method according to any of the preceding claims,
wherein said method comprises recording images of tires (40, 41, 42, 43) that are mounted on a common axle (31, 32) of the vehicle (10) and comparing them in order to determine whether the tires (40, 41, 42, 43) are correctly mounted on the common axle (31, 32), in particular in the same direction of rotation.

5. The method according to any of the preceding claims,
wherein said method comprises recording images of at least four or six tires (40, 41, 42, 43) mounted on the vehicle (10) in order to determine whether the tires (40, 41, 42, 43) are correctly mounted on the vehicle (10).

6. A device for checking the mounting of tires (40, 41, 42, 43) on a vehicle (10),
**characterized in that** said device comprises:
(a) at least one image recording device (120) which is configured to record images of at least two tires (40, 41, 42, 43) mounted on the vehicle (10), the images each covering at least a portion of a tire (40, 41, 42, 43); and
(b) at least one data processing device (140) which is configured to analyze the recorded images in order to determine whether the tires (40, 41, 42, 43) are correctly mounted on the vehicle (10), which includes determining whether the treads of the tires (40, 41, 42, 43) have a directional tread pattern, and determining whether the tires (40, 41, 42, 43) are mounted on the vehicle (10) in the direction of rotation predetermined by a directional tread pattern.

7. The device according to claim 6,
which comprises in addition:
a storage device (180) storing images each covering at least a portion of a tire (40, 41, 42, 43), and
a comparator device (170) configured to compare the images recorded by the at least one image recording device (120) to images stored in the storage device (180).

## Revendications

1. Procédé de vérification du montage de roues (40, 41, 42, 43) sur un véhicule (10),
**caractérisé en ce que** le procédé comprend les étapes :
(A) capture d'images d'au moins deux roues (40, 41, 42, 43) montées sur le véhicule (10), cependant que les images comprennent respectivement au moins une zone d'une roue (40, 41, 42, 43) et que les images comprennent en particulier des images d'une zone de la surface de roulement des roues (40, 41, 42, 43) :
(B) comparaison des images capturées et détermination révélant si les roues (40, 41, 42, 43) sont correctement montées sur le véhicule (10), ce qui inclut de déterminer si les surfaces de roulement des roues (40, 41, 42, 43) présentent un profil dépendant du sens de roulement et de déterminer si les roues (40, 41, 42, 43) sont montées sur le véhicule (10) dans le sens prédéterminé du roulement par un profil dépendant du sens de roulement.

2. Procédé selon la revendication 1, cependant que le procédé comprend de comparer au moins une image du profil de la surface de roulement d'une roue (40, 41, 42, 43) avec des images de profils de roues mémorisées dans une banque de données (180).

3. Procédé selon une des revendications précédentes, cependant que le procédé inclut de déterminer si les roues (40, 41, 42, 43) sont toutes montées dans le même sens de roulement sur le véhicule (10).

4. Procédé selon une des revendications précédentes, cependant que le procédé inclut de capturer et de comparer des images de roues (40, 41, 42, 43) montées sur un axe (31, 32) commun du véhicule (10) afin de déterminer si les roues (40, 41, 42, 43) sont correctement montées sur l'axe (31, 32) commun, en particulier dans le même sens de roulement.

5. Procédé selon une des revendications précédentes, cependant que le procédé inclut de capturer des images d'au moins quatre ou six roues (40, 41, 42, 43) montées sur le véhicule (10) afin de déterminer si les roues (40, 41, 42, 43) sont correctement montées sur le véhicule (10).

6. Dispositif de vérification du montage de roues (40, 41, 42, 43) sur un véhicule (10), **caractérisé en ce que** le dispositif comporte :
(a) au moins un équipement de capture d'images (120) conçu pour capturer des images d'au moins deux roues (40, 41, 42, 43) montées sur le véhicule (10), cependant que les images comprennent respectivement au moins une zone d'une roue (40, 41, 42, 43) ; et
(b) au moins un équipement de traitement de données (140) conçu pour évaluer les images capturées, afin de déterminer si les roues (40, 41, 42, 43) sont correctement montées sur le véhicule (10), ce qui inclut de déterminer si les surfaces de roulement des roues (40, 41, 42, 43) présentent un profil dépendant du sens de roulement et de déterminer si les roues (40, 41, 42, 43) sont montées sur le véhicule (10) dans le sens prédéterminé de roulement par un profil dépendant du sens de roulement.

7. Dispositif selon une la revendications 6, lequel comporte en plus :
un équipement de mémorisation (180) dans lequel des images qui comprennent respectivement au moins une zone d'une roue (40, 41, 42, 43) sont mémorisées, et un équipement de comparaison (170) conçu pour comparer des images capturées par le au moins un équipement de capture d'images (120) avec des images mémorisées dans l'équipement de mémorisation (180).
